# DEMANDE DE BREVET EUROPEEN

(11) **EP 4 462 281 A1**
(43) Date de publication de la demande: **13.11.2024**
(21) Numéro de dépôt: 24174584.3
(22) Date de dépôt: 07.05.2024
(51) Int. Cl.: G06F 16/55, G06V 20/70

(54) **PROCEDE POUR GENERER AUTOMATIQUEMENT UNE SEQUENCE D'IMAGES ORDONNEE POUR L APPLICATION DE TRAITEMENTS D'IMAGES DIFFERENCIES**

(30) Priorité: 09.05.2023 FR 2304605
(71) Demandeur: Grafmaker, 75017 Paris (FR)
(72) Inventeur: DELANGLE, Denis, 92410 VILLE-D'AVRAY (FR); DIETSCH, Frédéric, 95120 ERMONT (FR); GOMEZ, Maÿlis, 75018 PARIS (FR); HEGEDUS, Ibolya, 75012 PARIS (FR); HUMBLOT-FERRERO, Pierre, 75017 PARIS (FR); JACQUE, Manon, 75010 PARIS (FR); NGUYEN, Linda, 78140 BOUAFLE (FR); SALIERES, Laurent, 94470 BOISSY-SAINT-LEGER (FR); SCIPION, Alexandre, 77140 MONTEVRAIN (FR)
(74) Mandataire: Oak & Fox

(57) **Abrégé**

Procédé mis en oeuvre par ordinateur pour la sélection et d'ordonnancement d'un ensemble d'images pour un traitement d'images d'une séquence d'images, ledit procédé comportant :
▪ Première classification (CLASS₁) de chaque image du premier ensemble (ENS₁) selon des classes de contexte (CLc) ;
▪ Extraction d'une première spécification (SPEC₁) donnée en fonction en fonction d'au moins une première classe de contexte identifiée, ladite première spécification (SPEC₁) comportant un nombre d'images attendu, une pluralité de vues données de chaque image attendue et un ordre (ORDi) desdites images attendues ;
▪ Seconde classification (CLASS₂) selon des classes de vue (CLv) de chaque image du premier sous-ensemble ;
▪ Sélection d'une série d'images (S₁) du premier sous-ensemble d'images comportant un nombre donné d'images, chaque image sélectionnée correspondant à une vue donnée ;
▪ Ordonnancement de ladite série d'images.

## Description

### Domaine de l'invention

Le domaine de l'invention concerne les procédés et systèmes visant à traiter automatiquement un grand nombre d'images pour leur publication sur un serveur. Le domaine de l'invention se rapporte aux procédés et systèmes permettant d'identifier et sélectionner automatiquement des images et permettant d'appliquer des traitements d'images à une séquence donnée d'images.

### État de la technique

Actuellement, il existe des procédés permettant le traitement d'images en fonction d'un résultat à atteindre pour leur publication. Ces traitements peuvent comprendre des recadrages de l'image, le masquage de zone à retirer ou encore des extractions de zones d'intérêt.

Or un problème se pose lorsqu'il est nécessaire de traiter une grande quantité d'images reçues pour leur publication automatique. Généralement, dans ce type d'application de traitements automatisés d'un grand nombre d'images, il est nécessaire de traiter des séquences d'images pour répondre à différents souhaits de publications ou de contraintes. Il est par exemple, nécessaire d'homogénéiser un rendu d'une pluralité d'images, d'appliquer des stratégies de représentations et de proportions de certaines images. Par ailleurs, le sujet de l'image peut également nécessiter des traitements particuliers, par exemple au regard de l'anonymisation des individus représentés sur une photo ou encore sur l'exploitation de données de l'image telle qu'une étiquette à agrandir ou une orientation à uniformiser d'un objet. Il est donc nécessaire de considérer chaque image ou des groupes d'images pour leur appliquer des traitements particuliers. La nécessiter d'appliquer des traitements différenciés à un groupe d'images complexifie la mise en oeuvre de traitements d'images à une pluralité d'images.

Un problème des procédés existants adressant ces traitements d'images est qu'il est reste généralement des étapes de traitement à réaliser « à la main » notamment parce que les traitements à appliquer aux images sont hétérogènes, variés et dépendent souvent de la nature du sujet ou de l'objet à représenter.

La mise en oeuvre de traitements automatisés peut entrainer de nombreuses erreurs du fait d'un grand nombre de données à traiter. Notamment, ces erreurs peuvent survenir du fait d'une mauvaise détection d'une classe d'image, d'une mauvaise qualité d'images ou encore d'un manque d'informations nécessaires à l'exécution d'un process automatisé.

En outre, les méthodes actuelles de classification automatique sont trop coûteuses en temps de calculs et consommatrices en ressources de calculs,

Il existe un besoin de remédier aux inconvénients précités.

### Résumé de l'invention

Selon un premier aspect, l'invention concerne un procédé mis en oeuvre par ordinateur pour la sélection et d'ordonnancement d'un ensemble d'images pour un traitement d'images d'une séquence d'images, ledit procédé comportant :
▪ Réception d'une pluralité d'images définissant un premier ensemble d'images ;
▪ Première classification de chaque image du premier ensemble selon des classes de contexte à partir d'une première fonction apprenante mettant en oeuvre un modèle d'apprentissage machine entrainé à partir de données d'entrainement ;
▪ Extraction d'une première spécification donnée en fonction en fonction d'au moins une première classe de contexte identifiée, ladite première spécification comportant un nombre d'images attendu, une pluralité de vues données de chaque image attendue et un ordre desdites images attendues ;
▪ Sélection d'un premier sous-ensemble d'images de la première classe de contexte identifiée ;
▪ Seconde classification selon des classes de vue de chaque image du premier sous-ensemble sélectionnée en fonction de la première classe de contexte donnée ;
▪ Sélection automatique d'une série d'images du premier sous-ensemble d'images comportant un nombre donné d'images correspondant au nombre attendu de la spécification extraite, chaque image sélectionnée correspondant à une vue donnée de la pluralité de vues données de la spécification extraite ;
▪ Ordonnancement de ladite série d'images selon la première spécification extraite et des images sélectionnées dans la première série d'images ;
▪ Renommage des images sélectionnées de la première série et enregistrement desdites images avec un premier ensemble de métadonnées comportant au moins la classe de contexte pour application d'un traitement d'images en fonction d'une seconde spécification données relative à un traitement à appliquer à une séquence d'images.

Un avantage est de permettre de générer une séquence d'images ordonnées pour effectuer des traitements individualisés sur des images pour leur publication ultérieure.

Selon un mode de réalisation, les images reçues du premier ensemble d'images comportent un pré-traitement visant à identifier les doublons d'images dudit premier ensemble et à garder qu'une image parmi une pluralité d'images sensiblement identiques.

Selon un mode de réalisation, les images reçues du premier ensemble d'images comportent un pré-traitement visant à vérifier une dimension minimale de chaque image afin d'autoriser le recadrage d'une image lorsque ses dimensions sont suffisantes.

Un avantage est de conserver les images de meilleures qualités afin de générer la séquence d'image.

Selon un mode de réalisation, les images reçues du premier ensemble d'images sont classifiées par la première classification, chaque image étant associée à un score relatif à la probabilité d'appartenir à ladite classe de contexte, une étape de sélection d'un nombre d'images ayant les meilleurs scores dans chaque classe de contexte permettant de sélectionner les images retenues pour l'application de la seconde classification.

Un avantage est de déterminer le contexte des images reçues afin de déterminer la spécification à sélectionner pour appliquer une sélection de vues appropriée.

Selon un mode de réalisation, un calcul d'un score relatif à la probabilité d'appartenir à ladite classe de vue est réalisé pour chaque image classifiée par la première classification ou par chaque image du premier ensemble, une étape de sélection d'un nombre d'images ayant les meilleurs scores dans chaque classe de vue permettant de sélectionner les images retenues pour générer la première séquence.

Un avantage est de retenir les vues les plus pertinentes à retenir pour générer une séquence d'images selon une spécification sélectionnée.

Selon un mode de réalisation, la sélection du premier sous-ensemble d'images extrait du premier ensemble d'images est déterminée en fonction d'une distribution obtenue de la classification d'une proportion d'images classifiées dans chaque classe de contexte.

Selon un mode de réalisation, la première spécification sélectionnée est déterminée en fonction d'une distribution obtenue de la classification d'une proportion d'images classifiées dans chaque classe de contexte.

Un avantage est d'utiliser l'ensemble des informations disponibles pour détecter la classe de contexte, à savoir : le nombre d'images reçu, leur distribution, les classes de contexte détectées, etc. Un avantage est de faire moins d'erreur de sélection d'une classe de contexte.

Selon un mode de réalisation, les images reçues du premier ensemble d'images comportent un premier identifiant relatif à une entité. Un avantage est d'appliquer des spécifications propres à certains utilisateurs afin de réduire les erreurs de spécifications détectées lorsque l'algorithme comprend de nombreuses spécifications.

Selon un mode de réalisation, l'extraction de la première spécification est réalisée à partir d'une sélection de spécifications parmi des spécifications se rapportant au premier identifiant.

Selon un mode de réalisation, la classe de contexte peut se rapporter à :
▪ une première classe de contexte correspondant à des images comportant un sujet tel qu'un individu au sein de l'image, ou ;
▪ une seconde classe de contexte correspondant à des images comportant un sujet tel qu'un objet au sein de l'image, ou ;
▪ une troisième classe de contexte correspondant à des images comportant un sujet tel qu'un objet au sein de l'image.

Un avantage est de reconnaitre une classe de contexte dans laquelle certains traitements seront réalisés pour chaque image de la séquence à générer. Typiquement, certains traitements seront différenciés selon si un objet est porté par un modèle tel qu'un mannequin dans un environnement ou s'il sera uniquement représenté dans un environnement avec possiblement un humain dans l'environnement.

Selon un mode de réalisation, un contrôle de nombre de vues est réalisé consécutivement à la seconde classification, ledit contrôle permettant de vérifier l'existence dans chaque premier ensemble d'au moins une image classée selon chaque classe de vue de la première spécification.

Selon un mode de réalisation, lorsque le contrôle de nombre de vues n'est pas conforme à la valeur de la première spécification, alors une notification électronique est émise automatiquement vers un serveur distant, ladite notification comportant un indicateur de l'image manquante selon une classe de vue.

Un avantage est de s'assurer du bon nombre de vues ou d'émettre une notification dans l'objectif d'obtenir les vues manquantes.

Selon un mode de réalisation, une classe de produit d'au moins une image du premier ensemble est déterminée par l'application d'un algorithme de classification d'image pour classifier des images en entrée selon une pluralité de classes de produit.

Un avantage est d'optimiser la détection de la spécification qui peut dépendre dans certains cas de la classe de produit.

Selon un mode de réalisation, l'algorithme de classification d'image pour classifier ladite image selon une classe produit est réalisé :
▪ En mettant en oeuvre un algorithme d'apprentissage machine entrainé à partir d'un ensemble d'images d'entrainement labelisées et/ou ;
▪ En mettant en oeuvre un algorithme d'apprentissage machine entrainé à partir d'un ensemble de noms de fichiers labelisés.

Un avantage est de tirer profit d'un maximum d'information pour classer les classes de produits.

Selon un exemple de réalisation, lorsque le nom de fichiers ou la structure du nom de fichier est décodé(e), une requête est automatiquement générée pour interroger une base de données pour extraire une classe produit. Les données peuvent alors être agrégées à l'image en tant que métadonnée.

Selon un mode de réalisation, la première spécification est déterminée en fonction de la détermination de la classe de produit d'au moins une image du premier ensemble.

Selon un mode de réalisation, la classe de vue peut se rapporter à :
▪ une première classe de vue correspondant à des images comportant un objet en gros plan au sein de l'image, ou ;
▪ une seconde classe de vue correspondant à des images comportant un objet ou un sujet présent dans un paysage au sein de l'image, ou ;
▪ une troisième classe de contexte correspondant à des images comportant un objet ayant un étiquetage au sein de l'image,
▪ une quatrième classe de contexte correspondant à des images comportant un objet d'un type donné ayant une première orientation donnée au sein de l'image.

Selon un second aspect, l'invention concerne un procédé pour générer une seconde séquence d'images comprend :
▪ réception d'une séquence d'images ordonnées, ladite séquence étant associée à une classe de contexte, chaque image de ladite séquence représentant au moins une vue d'un produit, chaque image comportant un nom de fichier ;
▪ identification de la classe de vues de chaque image ;
▪ identification d'une classe de produit d'un objet présent dans au moins une image de la première séquence ;
▪ extraction d'une seconde spécification donnée en fonction de la classe de contexte, de la classe de vue et de la classe de produit d'au moins une image de la séquence, ladite seconde spécification comportant pour au moins une image de la séquence une donnée de traitement à appliquer à ladite image ;
▪ Traitement de l'image pour générer une image modifiée ;
▪ Génération d'une seconde séquence d'images pour leur publication sur une page WEB comportant ladite image modifiée.

Un avantage de ce second procédé est de permettre de traiter une séquence d'images ordonnée pour appliquer automatiquement des traitements différenciés auxdites images. L'ordonnancement, lorsqu'elle est comparée à une spécification de traitement peut permettre de sélectionner les images dans la séquence pour appliquer tel ou tel traitement.

Ce second procédé peut être par exemple mis en oeuvre consécutivement à la mise en oeuvre d'un procédé pour la sélection et d'ordonnancement d'un ensemble d'images pour un traitement d'images d'une séquence d'images. En conséquence, ce second procédé peut être mis en oeuvre avec un procédé d'un des modes de réalisation de l'invention. Un avantage de la mise en oeuvre de ces deux procédés et de pouvoir les traiter indépendamment par exemple sur deux serveurs ou de manière conjointe sur un même serveur.

Selon un second aspect, le procédé comprend le décodage du nom de fichier d'au moins une image de la première séquence reçue, ledit décodage mettant en oeuvre un premier composant segmentant un ensemble de blocs de caractères alphanumériques composant ledit nom de fichier et mettant en oeuvre un algorithme d'apprentissage machine pour classifier ledit nom de fichier parmi des classes prédéfinies.

Un avantage du décodage du nom de fichier à ce stade est de se coordonner avec l'algorithme de renommage du premier procédé pour la sélection et d'ordonnancement d'un ensemble d'images pour un traitement d'images d'une séquence d'images

Selon un mode de réalisation, la classe de produit est obtenue :
▪ Soit par l'application d'un algorithme de traitement d'image pour reconnaitre une classe de produit par un algorithme d'apprentissage machine entrainé à partir d'un ensemble d'images d'entrainement ;
▪ Soit par le décodage d'une métadonnée transmise avec la première séquence d'images ;
▪ Soit par le décodage d'un nom de fichier d'une image de la première séquence dans lequel la classe produit est encodé.

Selon un mode de réalisation les données de traitement extraites de la seconde spécification comprennent :
▪ Des données définissant une cote et un gabarit de produit pour générer un recadrage d'une zone délimitant ledit objet et un positionnement de ladite zone recadrée en fonction ;
▪ Des données définissant une ligne d'horizon de l'image visant à positionner un point de l'objet sur ladite ligne d'horizon, le point pouvant être par exemple le barycentre ou le milieu de la zone délimitant ledit objet ;
▪ Des données de recadrage d'une étiquette détectée dans une zone dudit objet de l'image pour extraire ladite étiquette le cas échéant pour générer une image de l'étiquette selon une dimension prédéfinie ;
▪ des données de redimensionnement de l'image, de résolution de l'image ou de repositionnement dans un nouveau cadre de l'image d'un point caractéristique de l'image ;
▪ des données d'orientation d'un objet afin d'appliquer une modification de l'orientation du produit dans l'image pour générer une nouvelle image ;
▪ une donnée de configuration prédéfinie.

Selon un autre aspect, le système de traitement automatisé d'un ensemble d'images pour leur publication sur un média numérique comporte un premier serveur permettant de réaliser les étapes du procédé pour la sélection et d'ordonnancement d'un ensemble d'images pour un traitement d'images d'une séquence d'images et un second serveur permettant de réaliser les étapes du procédé pour générer une séquence d'images prêtes pour leur publication, lesdites images traitées étant organisées sous la forme d'une séquence d'images ordonnées.

### Brève description des figures

D'autres caractéristiques et avantages de l'invention ressortiront à la lecture de la description détaillée qui suit, en référence aux figures annexées, qui illustrent :
Figure 1 : un premier exemple d'étapes d'un mode de réalisation du procédé de l'invention permettant de générer une séquence d'images ordonnées ;
Figure 2 : un exemple d'étapes d'un mode de réalisation du procédé de l'invention permettant d'appliquer des traitements d'images à une séquence d'images générée par le procédé de l'invention ;
Figure 3 : un exemple d'architecture système d'un mode de réalisation de l'invention.
Figure 4 : un premier exemple d'une image d'un individu portant des vêtements parmi un ensemble d'images reçues ;
Figure 5 : un premier exemple de traitement de l'image de la figure 4 pour sa publication ;
Figure 6 : un second exemple de traitement de l'image de la figure 4 pour sa publication ;
Figure 7 : un second exemple d'une image d'un individu en situation avec un objet parmi un ensemble d'images reçues,
Figure 8 : un exemple de traitement automatique de l'image de la figure 7 pour sa publication.

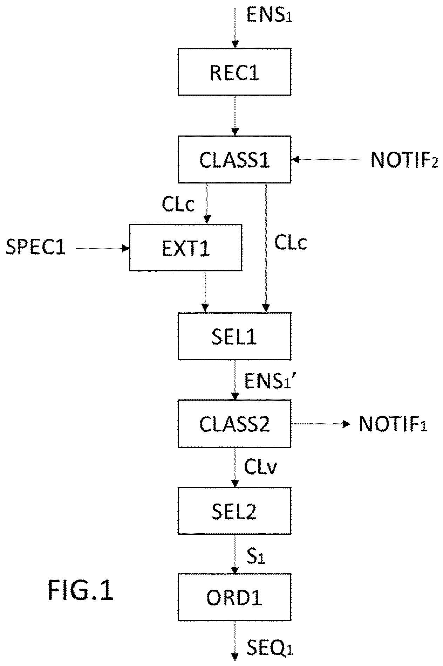

La figure 1 représente un mode de réalisation de l'invention et notamment des exemples d'étapes mises en oeuvre pour générer une séquence d'images auxquelles seront appliqués des traitements d'images.

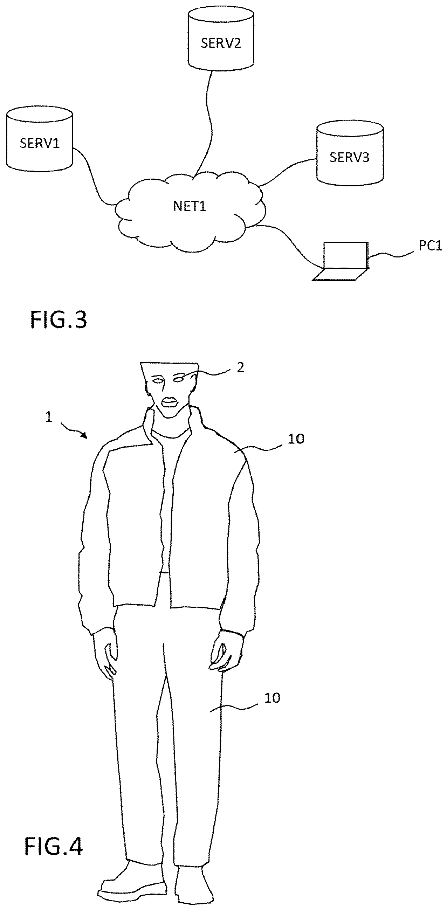

Le procédé comprend une première étape, notée REC₁, de réception d'un ensemble d'images ENS₁. Ces images sont reçues préférentiellement sur un serveur accessible depuis un réseau de données. Le serveur est noté SERV₁ sur la figure 3 et le réseau de données est noté NET₁, il peut s'agir par exemple du réseau internet. Toutefois, selon une autre configuration, l'invention s'applique à un réseau privé, tel qu'un réseau d'entreprise ou un réseau d'une organisation. Le serveur comprend alors à cet effet une interface de communication pour recevoir des données numériques émises par une autre entité connectée au réseau de données NET₁. Un PC, un serveur ou une tablette ou encore un Smartphone peut définir l'équipement depuis lequel les images sont émises vers le serveur SERV₁.

Un serveur d'authentification, tel que le serveur SERV₂ représenté à la figure 3 peut être mis en oeuvre afin d'obtenir les accès au serveur SERV₁. Le serveur SERV₁ peut être configuré pour réaliser un stockage des données et donc un stockage des images et il peut être configuré pour réaliser les premiers traitements notamment ceux correspondant aux premières étapes du procédé de l'invention représentées à la figure 1.

Selon un mode de réalisation, avant la mise en oeuvre de la première étape de classification CLASS₁, une étape de pré-traitements (non représentée) peut être mise en oeuvre afin de supprimer des images du premier ensemble afin de réaliser une sélection préalable d'un sous-ensemble d'images. Ces pré-traitements peuvent correspondre à un contrôle de nom de fichier de chaque image afin de vérifier une mise en forme du nom de chaque image. Selon un autre exemple, un pré-traitement peut correspondre à un contrôle d'une taille d'une image, de ses dimensions ou de sa résolution. Un intérêt de ces premiers pré-traitements est de réaliser des étapes simples et peu couteuses en temps de calcul dans un premier temps pour éviter de mettre en oeuvre des calculs plus importants à une étape ultérieure, telle que cette de l'application d'un réseau de neurones ou d'une fonction statistique pour classifier les images.

Selon un exemple, un scan des données de l'image permet de vérifier que les dimensions d'une image sont supérieures à un seuil prédéfini. Si les dimensions de l'images sont supérieures à un seuil donné, l'image est conservée, dans le cas contraire l'image n'est pas conservée.

Selon un exemple de réalisation, lorsqu'il existe qu'une seule image d'une classe donnée, l'image est conservée.

Selon un exemple, lorsqu'il existe au moins deux images dans une classe données, l'image de plus grande dimension est conservée.

Selon un exemple, lorsqu'il existe qu'une ou plusieurs images dans une classe donnée dont les dimensions de toutes les images sont inférieures à un seuil donné, une notification est émise. La notification est émise par exemple vers un serveur tiers afin d'informer que la réémission d'une image conforme doit être réengager. Selon un exemple de réalisation, la génération d'une telle notification est engagée automatiquement en considérant un identifiant utilisateur décodé qui est associé avec une adresse de courriel électronique.

Selon un autre exemple, lorsque les dimensions sont inférieures à un seuil donné et qu'aucune autre image de la classe d'image avec une meilleure résolution ne peut être sélectionnée, alors une étape d'augmentation de la résolution est engagée. Cette étape est connue dans la littérature anglosaxonne dans le domaine de la photo comme une étape d' « upscale ». Cette étape vise à générer de nouveaux pixels à partir d'un algorithme pour augmenter « artificiellement » la résolution de l'image. L'agrandissement artificiel de l'image est réalisé pour franchir un seuil critique de rejet de l'image.

Cette étape peut être réalisée conjointement à l'émission d'une notification, un intérêt est d'organiser une séquence d'images pour leur publication et permettre de publier rapidement des images tout en assurant une potentielle correction ultérieure en remplaçant une image par une autre.

La figure 1 représente une première étape de classification CLASS₁ des images reçues ENS₁. Cette première classification CLASS₁ de chaque image du premier ensemble ENS₁ est configurée pour classer les images selon des classes de contexte CLc. CLASS₁ désigne également le premier classifieur comprenant les moyens matériels et logiciels pour mettre en oeuvre la première classification.

Selon un mode de réalisation, la fonction de classification est réalisée à partir d'une première fonction apprenante mettant en oeuvre un modèle d'apprentissage machine entrainé à partir de données d'entrainement. Le modèle d'apprentissage machine peut être par exemple un réseau de neurones tel qu'un réseau de neurones convolutionnel autrement appelé un réseau neuronal convolutif. D'une manière générale, la première fonction apprenante peut être toute fonction comportant des coefficients qui sont appris lors d'une phase d'entrainement supervisé réalisée avec des images labélisées selon les classes de contexte CLc. Selon un premier exemple, la fonction apprenante peut donc regrouper des matrices telles qu'un réseau neuronal convolutif au sein desquelles les coefficients sont appris. Selon un second exemple, la fonction apprenante peut être une fonction statistique.

La première classification CLASS₁ vise à classifier les images du premier ensemble d'images ENS₁ selon des classes prédéfinies. Cette première classification CLASS₁ peut être associée à un score qui est calculé afin de définir un seuil au-delà duquel l'image est dans une classe de contexte et en dessous duquel l'image n'est pas dans la classe de contexte. Selon un autre exemple, une pluralité de scores peut être calculée pour chaque classe de contexte pour chaque image afin de discriminer la classe de contexte la plus vraisemblable. Selon un autre exemple, lorsque des scores sont proches pour une même image au sein de plusieurs classes de contexte, une étape de calcul supplémentaire ou de contrôle peut être mise en oeuvre afin de réaliser un test automatique supplémentaire ou une vérification par un humain.

Selon différents modes de réalisation, le score peut prendre en compte différents critères. Une pondération des critères peut être mis en oeuvre afin de prendre en compte un critère de manière plus importante qu'un autre critère. Parmi les critères on retrouve la statistique ou la probabilité d'une image à appartenir à une classe, la résolution de l'image, les dimensions de l'image ou tout autre critère définissant une propriété de l'image.

La première classification CLASS₁ comprend au moins deux classes de contexte CLc. Selon un mode de réalisation, la première classification comporte une première classe de contexte d'un objet dite « portée », c'est-à-dire que l'objet est porté sur un individu. Il s'agit pour la plus grande partie des objets de vêtements, de chapeau, de sac ou de chaussures. Selon ce mode de réalisation, cette première classification comporte une seconde classe de contexte dite « photo d'ensemble » et plus connu dans la littérature anglo-saxonne comme une classe dite « Packshot ». Dans cette classe de contexte, un objet est présenté dans un fond uni. Selon un autre exemple, la première classification comprend une troisième classe de contexte dite "photo d'ambiance", qui correspond à une photo d'un objet dans un décor ou un paysage dans lequel d'autres objets peuvent être présents.

L'identification de l'objet ou du type d'objet peut être réalisé de différentes manières. Une première manière est d'interpréter une donnée transmise avec l'ensemble d'images ENS₁. Une seconde manière est de décodée dans le nom de fichier correspondant à une image une référence liée à un produit et de comparer cette référence avec une base de données de références connues. Une troisième manière est d'exécuter une fonction apprenante mettant en oeuvre un modèle d'apprentissage machine pour identifier une classe de produit à partir du nom de fichier. Ce nom peut par exemple être segmenté préalablement sous la forme de blocs de caractères alphanumériques pour décoder chaque bloc, par exemple à partir d'un algorithme d'apprentissage machine. Une quatrième manière comprend l'exécution d'un algorithme de détection du produit au sein de l'image par exemple par la mise en oeuvre d'un algorithme d'apprentissage machine entrainé à partir d'un ensemble d'images labelisées.

La classe produit CLp peut avantageusement être utilisée pour sélectionner une première spécification SPEC₁ par exemple en combinaison avec d'autres données telles que la classe de contexte et/ou un identifiant d'utilisateur.

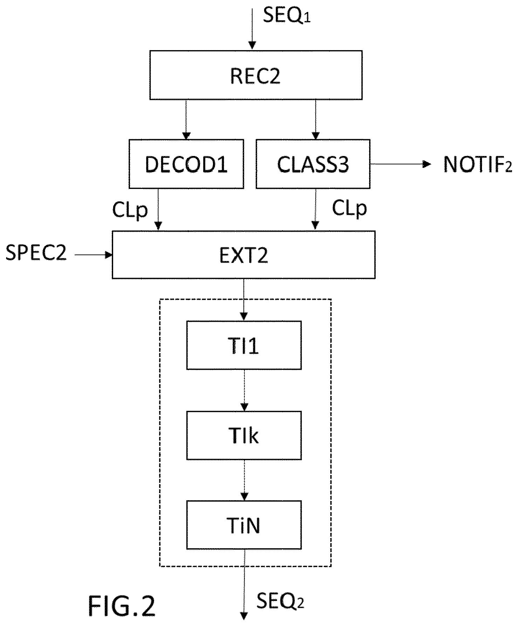

L'étape de classification d'une image selon une pluralité de classe de produit CLP est notée CLASS₃. Elle est préférentielle réalisée lors de la première phase du procédé visant à générer la première séquence SEQ₁, toutefois cette étape peut également être mise en oeuvre dans la seconde phase du procédé visant à générer la seconde séquence SEQ₂ d'images transformées à partir des images de la première SEQ₁. La figure 2 représente cette étape dans cette seconde phase. Un intérêt est d'enrichir la classification de l'objet de l'image au sein d'une classe produit pour adapter des traitements particuliers à l'image. Un autre intérêt est de corroborer une donnée qui peut être reçue en entrée identifiant le produit qui n'a pas été vérifiée dans la première phase du procédé.

Lorsque la classe de contexte CLc est identifiée grâce à la première classification, l'image est associée à cette classe de contexte. Selon un exemple, cette association correspond à une labélisation de l'image, c'est-à-dire la création d'une métadonnée qui est enregistrée par exemple dans une base de données dans laquelle un identifiant de l'image est également enregistré. Selon un exemple, l'association comprend l'enregistrement des images d'une classe de contexte CLc donnée dans un même répertoire. Selon un autre exemple, un renommage du fichier de l'image est réalisé.

L'ensemble des images de l'ensemble d'images reçues ENS₁ est donc classé selon la première classification CLASS₁. Selon un mode de réalisation, une règle est définie selon la répartition des classes dans lesquelles les images ont été classifiées pour extraire une première spécification donnée SPEC₁ d'une mémoire. La première spécification donnée SPEC₁ comprend des paramètres et un ensemble de traitements ou d'actions à réaliser sur l'ensemble d'images ENS₁ ou une partie de cet ensemble ESN₁ afin de générer une séquence ordonnée d'images à partir du premier ensemble ENS₁.

Selon un mode de réalisation, une première spécification SPEC₁ donnée est associée à une classe de contexte donnée.

Dans ce cas, différentes réalisations de l'invention permettent de définir différentes règles permettant de sélectionner la première spécification SPEC₁ en fonction d'une ou de classes de contexte CLc identifiées par l'ensemble des images ENS₁. Selon un premier exemple, lorsqu'au moins une classe de contexte correspond à la classe « portée », alors une première spécification SPEC₁ donnée est automatiquement sélectionnée.

Selon un second exemple, la proportion majoritaire de la classe de contexte la plus représentative permet d'identifier une classe de spécification CLc donnée.

Selon un troisième exemple, un nombre donné d'images dans la classe « photo d'ensemble » permet de sélectionner une première spécification CLc donnée.

Selon un quatrième exemple, la présence d'au moins une image dans la classe « photo d'ensemble » et au moins une image dans la classe « photo d'ambiance » permet de sélectionner une première spécification donnée.

Selon un autre exemple, la première spécification SPEC₁ est déterminée à partir d'une donnée associée avec l'ensemble des images reçues. Il peut s'agir d'une métadonnée enregistrée dans un fichier de configuration, ou une métadonnée encodée dans l'image ou encore une donnée encodée dans le nom du fichier d'au moins une image du premier ensemble ENS₁.

La première spécification SPEC₁ est donc extraite automatiquement consécutivement à la réception d'un ensemble d'images ENS₁ à traiter. Cette étape d'extraction EXT₁ de la première spécification SPEC₁ est notée EXT₁ sur la figure 1. La première spécification SPEC₁ comprend un nombre d'images attendu noté Nb₁, une pluralité de vues données V1i de chaque image attendue et un ordre ORD₁ desdites images attendues.

Par exemple, une première spécification SPEC₁ comprend la définition d'une série d'images correspondant à une série de 4 images, telle qu'une première vue IM₁ de face d'une image d'une classe de contexte portée, une seconde vue IM₂ de dos d'une image d'une classe de contexte portée, une troisième vue IM₃ de côté d'une image d'une classe de contexte portée et une quatrième vue IM₄ de face d'une image d'une classe de contexte photo d'ensemble.

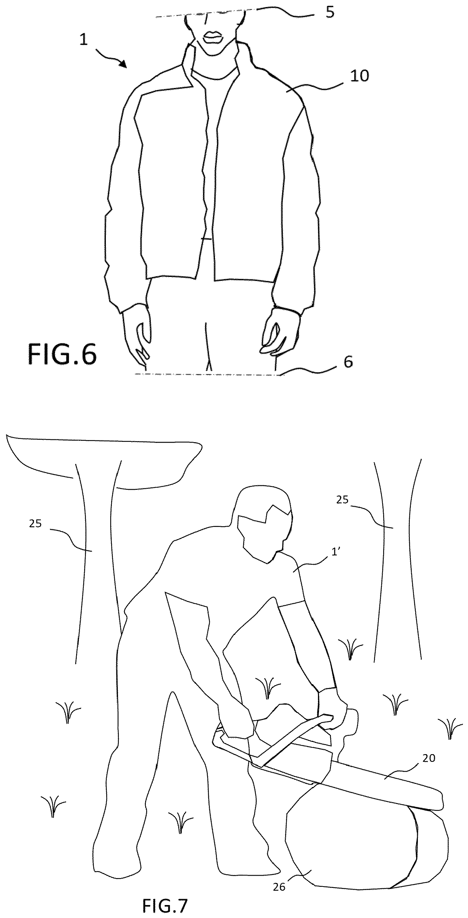

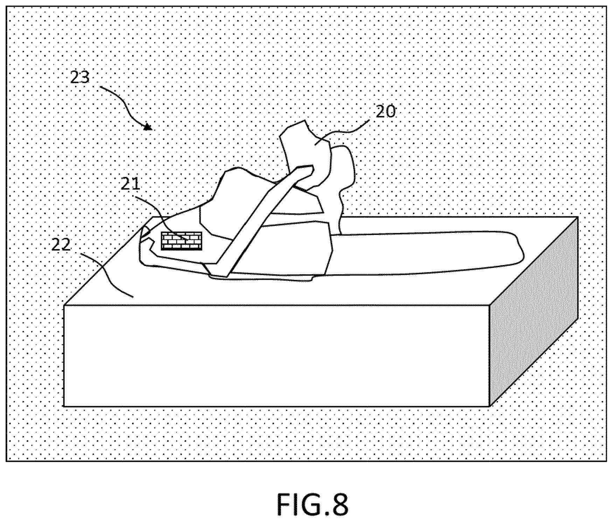

Selon un autre exemple, une première spécification SPEC₁ comprend la définition d'une série d'images correspondant à une série de deux images représentées schématiquement aux figures 7 et 8 d'un objet, respectivement ici représenté par une tronçonneuse, selon une première vue d'une image d'une classe de contexte d'image d'ambiance à la figure 7 et selon une seconde vue d'une image d'une classe de contexte photo d'ensemble à la figure 8.

Selon un autre exemple, cette dernière série aurait pu être complétée d'autres photos par exemple au travers d'une autre première spécification SPEC₁ qui peut comprendre une série de 3 ou 4 images par exemple.

En conséquence, la première spécification SPEC₁ comprend un nombre d'images attendues et un nombre de vues d'images selon des classes de contexte donné.

En outre, la première spécification SPEC₁ comprend un ordre, ou encore un ordonnancement, des images attendues. Dans le premier cas, IM₁, IM₂, IM₃ et IM₄ peuvent être ordonnées par leur index et être ainsi numérotées dans l'ordre de leur séquence. Un intérêt est de permettre d'effectuer des traitements dédiés à chacune des images dans une étape ultérieure pour leur publication automatique.

Afin d'identifier les différentes vues parmi les différentes images du premier ensemble ENS₁ classées selon des classes de contexte CLc, un second classificateur CLASS₂ de vues est mis en oeuvre. La désignation CLASS₂ désigne aussi bien le second classificateur que la seconde étape de classification. Le second classifieur comprenant les moyens matériels et logiciels pour mettre en oeuvre la seconde classification.

La seconde classification CLASS₂ comprend la classification de toute ou partie des images classées par la première classification. Selon un exemple, la seconde classification sera mise en oeuvre uniquement sur des images classées selon une classe du premier classificateur CLASS₁. Selon un autre exemple, la seconde classification CLASS₂ est appliquée uniquement à des images ayant un nom de fichier selon un certain formalisme prédéfini.

Selon un mode de réalisation, la fonction de classification CLASS2 est réalisée à partir d'une seconde fonction apprenante mettant en oeuvre un modèle d'apprentissage machine entrainé à partir de données d'entrainement. Le modèle d'apprentissage machine peut être par exemple un réseau de neurones tel qu'un réseau de neurones convolutionnel autrement appelé un réseau neuronal convolutif. D'une manière générale, la seconde fonction apprenante peut être toute fonction comportant des coefficients qui sont appris lors d'une phase d'entrainement supervisé réalisée avec des images labélisées selon les classes de vue CLv. Selon un premier exemple, la fonction apprenante peut donc regrouper des matrices telles qu'un réseau neuronal convolutif au sein desquelles les coefficients sont appris. Selon un second exemple, la fonction apprenante peut être une fonction statistique.

Chaque classe de contexte comporte un ensemble de vues possibles de l'objet. L'entrainement est donc préférentiellement réalisé pour une classe de contexte donné.

La seconde classification CLASS₂ vise à classifier les images d'une classe de contexte donnée d'images du premier ensemble d'images ENS₁. Cette seconde classification CLASS₂ peut être associée à un score qui est calculé afin de définir un seuil au-delà duquel l'image est dans une classe de vue CLv et en dessous duquel l'image n'est pas dans la classe de vue CLv. Selon un autre exemple, une pluralité de scores peut être calculée pour chaque classe de vue CLv pour chaque image afin de discriminer la classe de vue CLv la plus vraisemblable. Selon un autre exemple, lorsque des scores sont proches pour une même image au sein de plusieurs classes de vue CLv, une étape de calcul supplémentaire ou de contrôle peut être mis en oeuvre afin de réaliser un test automatique supplémentaire ou une vérification par un humain afin d'attribuer la bonne classe de vue Clv. L'intervention d'un humain peut notamment être planifiée dans une phase d'apprentissage afin d'enrichir les images de labels. La classe de vue peut être également corrigée automatiquement après la réception d'une notification indiquant une mauvaise classification de l'image. La notification peut prendre par exemple la forme d'un rapport dans un format numérique par exemple .doc, .pdf émis grâce à l'émission et la réception d'un message.

Selon différents modes de réalisation, le score peut prendre en compte différents critères. Une pondération des critères peut être mis en oeuvre afin de prendre en compte un critère de manière plus importante qu'un autre critère. Parmi les critères on retrouve la statistique ou la probabilité d'une image à appartenir à une classe, la résolution de l'image, les dimensions de l'image ou tout autre critère définissant une propriété de l'image.

La seconde classification CLASS₂ comprend au moins deux classes de vue CLv. Selon un mode de réalisation, la seconde classification CLASS₂ comporte une première classe de vue CLv₁ d'un objet dite « gros plan », c'est-à-dire que l'objet est au premier plan de l'image et occupe une certaine proportion de l'image. Il peut s'agir de n'importe quel objet représenté au sein d'une photo, tel qu'un meuble, un vêtement, un bien de consommation, un outil, etc. Selon ce mode de réalisation, cette seconde classification CLASS₂ comporte une seconde classe CLv₂ se rapportant à des images représentant un objet dans un plan large.

Une troisième classe de vue CLv₃, dite « orientation droite » et une quatrième classe CLv₄ dite « orientation gauche » peuvent également être définies. Ces classes permettent d'identifier une orientation d'un objet tel que des chaussures ou une tête d'un individu ou de son regard.

Dans cet exemple, la troisième classe CLv₃ et la quatrième classe CLv₄ peuvent être complémentaires de la première classe et seconde classe, c'est-à-dire qu'elles ne sont exclusives entre ces groupes de classes. Toutefois, lorsque la troisième classe est associée à une image, la quatrième classe ne peut pas l'être. Dans ce cas, ces classes sont exclusives l'une de l'autre.

L'invention permet de paramétrer des règles d'exclusions ou de complémentarité de classes de vues d'une classe de contexte.

Selon un autre exemple, une cinquième classe CLv₅ permet de classer des configurations d'un objet. Les configurations correspondent à des déclinaisons de représentation d'un objet. Par exemple, une première configuration correspondant à une sous-classe CLv₅₁ est une configuration ouverte, une seconde configuration correspondant à une sous-classe CLv₅₂ est une configuration fermée, une troisième configuration correspondant à une sous-classe CLv₅₃ est une configuration éclatée, c'est à dire dans laquelle l'ensemble des pièces d'un objet est représenté. Dans le cas d'un meuble, tel qu'une commode comporte deux portes et un tiroir, la première configuration correspond à la commode fermée, la seconde configuration correspond à la commode ayant une porte ouverte et la troisième configuration correspond à la commode dans laquelle le tiroir a été tout ou en partie extrait et les deux portes sont ouvertes.

On comprend qu'une image du premier ensemble ayant une classe de contexte CLc₂ peut avoir la combinaison de classes suivantes {CLv₁, CLv₃, CLv₅₁}.

Selon un autre exemple, une sixième classe CLv₆ et une septième classe CLv₇ peuvent être des classes permettant de classifier les images représentant un objet ayant une étiquette visible ou non. Un intérêt de cette classification est de générer un traitement spécifique visant par exemple à agrandir une portion de l'image comportant une étiquette dans la zone de l'image dans laquelle il y a une étiquette.

Selon un exemple, lorsqu'une classification aboutit à une erreur de classe ou une incohérence de classe par exemple en associant des classes incompatibles entre elles à une image, une notification NOTIF₁ peut être émise automatiquement de sorte à requérir une vérification automatique ou humaine d'une classe associée à une image. La notification peut prendre par exemple la forme d'un rapport édité dans un format numérique par exemple .doc, .pdf.

Lorsque toutes les images de la sélection d'images classées par la seconde classification CLASS₂ ont été traitées, une seconde sélection d'images SEL₂ peut être mises en oeuvre pour choisir le nombre d'images correspondant au nombre d'images prédéfini dans la première spécification SPEC₁.

Selon un exemple, une spécification SPEC₁ comprend une liste de 4 images ayant 4 classes de vues différentes et un ordre donné de ces vues. Selon ce même exemple, un ensemble de 10 images est reçu dans l'ensemble ENS1. Des premiers pré-traitements permettent d'écarter trois images parmi la liste de 10 images. Une première image écartée est considérée comme floue, une seconde image est considérée comme un doublon d'une autre image et une troisième image correspond à une erreur d'images, par exemple parce que l'objet représenté dans cette image est différent de tous les autres objets de toutes les autres images.

Il reste, dans cet exemple, 7 images à classer grâce à la seconde classification CLASS₂ puisque 3 images ont été écartées par les pré-traitements. Parmi les images classées, 4 images sont retenues du fait que la spécification SPEC₁ comprend un nombre de 4 images.

Dans cet exemple, parmi les 7 images classées, 2 images sont classées dans la même première classe de vue attendue, 2 autres images sont classées dans une seconde classe de vue attendue, une autre image est classée dans une troisième classe de vue attendue, une autre image est classée dans une quatrième classe de vue attendue, enfin une dernière image est classée dans une classe de vue non attendue. On entend par une classe de vue attendue, une classe de vue précisée dans la première spécification SPEC₁ et une classe de vue non attendue, une classe de vue non spécifiée dans la spécification SPEC₁.

Afin de déterminer si deux images sont des doublons l'une de l'autre, un algorithme peut être mis en oeuvre visant à comparer des données entre les deux images considérées. Les données comparées peuvent être des métadonnées et/ou des données de pixels définissant l'image elle-même.

Les métadonnées peuvent être le nom du fichier, la taille du fichier ou toutes autres données encodées dans le fichier.

Selon un exemple qui peut se combiner à l'algorithme qui effectue la comparaison des métadonnées, un autre algorithme compare des groupes de pixels de chaque image. En effet, un doublon peut être déterminé en comparant 10 points définissant chacun un ou plusieurs pixels de chaque image. Les pixels ou groupes de pixels comparés définissant des points peuvent être multiplié de sorte à comparer différents groupes de pixels.

Selon un exemple, l'ensemble des données de deux images sont comparées entre elles. Par exemple, un pourcentage de pixels semblables entre les deux images peut être calculé. Dans ce cas, un pourcentage seuil peut être configuré pour déterminer si deux images sont des doublons l'une de l'autre.

Selon un exemple de réalisation, un premier algorithme de comparaison comparant quelques points entre deux images est mis en oeuvre. Dans le cas d'une similarité des points de comparaison, un second algorithme est appliqué qui permet de comparer un plus grand nombre de pixels entre les deux images. La mise en oeuvre d'un tel premier algorithme de comparaison permet de réduire les temps de calculs lorsqu'un grand nombre d'images doit être traité tout en assurant une comparaison fine par un second algorithme de comparaison lorsque des indices d'images en doublon sont relevés.

Selon un autre cas de figure, deux images comportant une même classe d'un classifier peuvent être annotées comme doublons potentiels l'une de l'autre. Typiquement, lorsque l'algorithme détecte un élément caractéristique d'une image, tel qu'un objet, par exemple un parapluie, dans chaque image, un algorithme configuré pour détecter des objets dans une image peut être mis en oeuvre pour générer un indicateur de « doublon à confirmer ». Dans un second temps un algorithme plus fin permet de vérifier si les images sont réellement des doublons l'une de l'autre.

Le procédé de l'invention permet de mettre en oeuvre une étape de calcul de score permettant d'apprécier automatiquement la meilleure classification entre deux images ayant la même classe à l'issue de la seconde classification CLASS₂. Ce score peut correspondre à un calcul statistique de vraisemblance ou encore un calcul de distance selon une métrique définie par le classifieur.

Dans ce dernier cas, les 4 images correspondantes aux images ayant les meilleurs scores dans chaque classe de vue attendue peuvent être sélectionnées. Cette étape de sélection est notée SEL₂ sur la figure 1.

Selon un mode de réalisation, dans un second temps, lorsque les images sont sélectionnées pour chacune des vues, le procédé permet de les ordonner selon l'ordre prédéfini qui est défini dans la première spécification sélectionnée. Le procédé permet donc de générer une première séquence d'images SEQ₁.

Dans un mode de réalisation, le procédé de l'invention comprend une étape permettant de renommer les images sélectionnées et ordonnées.

Une première séquence SEQ₁ peut avoir un type ou un identifiant donné permettant d'être traitée d'une certaine manière. Par exemple, une séquence de tel type peut être émise vers un serveur de pré-traitement pour appliquer des traitements intermédiaires, ou elle peut être envoyé pour un contrôle qualité car les séquences en question doivent être labelisé dans une phase d'apprentissage ou encore elles sont émises vers un serveur pour appliquer des traitements d'images particuliers.

Selon un mode de réalisation, un traitement commun est appliqué à l'ensemble des images de la sélection, ces traitements peuvent comprendre un redimensionnement pour générer des images de mêmes dimensions ou un traitement visant à générer des images de mêmes résolutions, soit en diminuant la résolution de certaines images, soit en augmentant la résolution de certaines images. Selon un autre exemple, un traitement appliqué à chaque image vise à incruster un même élément graphique dans l'image préférentiellement à la même position dans l'image. Il peut s'agir d'un logo, d'une mention spécifique, ou d'une indication d'un copyright c'est-à-dire de la présence d'un droit d'auteur au sein de l'image. Selon un autre exemple, il peut s'agir d'un fond commun à chaque image.

### Exemple d'une première spécification SPEC₁

Selon un exemple, une première spécification SPEC₁ comprend pour un objet donné et un identifiant donné correspondant à un utilisateur donné une liste de vues souhaitées de l'objet, chaque vue définissant une image. Cette liste de vues souhaitées comprend des caractéristiques attendues. Si l'objet ou le produit est une paire de chaussures, la première spécification SPEC₁ peut comprendre pour une vue donnée une orientation droite des chaussures, une place des chaussures dans l'image exprimée en proportion de l'image. En outre, la première spécification peut comprendre une liste ordonnée d'images de différentes classes de contexte. Par exemple la première spécification SPEC1 peut comprendre une liste de quatre images de classes de contexte CLc de type « photo d'ensemble » et une classe de contexte CLc de type « portée ».

L'invention permet de chainer deux traitements spécifiques à un groupe d'images de manière à optimiser les temps et ressources de calculs. La première chaine de traitement vise à organiser une séquence ordonnée d'images et la seconde chaine de traitement vise à traiter de manière différencier chaque image. A cet effet, la première spécification SPEC1 comprend des informations permettant de reconnaitre des images d'un ensemble d'images pour préparer les traitements à réaliser sur lesdites images. Les données permettant de paramétrer les traitements sont spécifiés dans une seconde spécification SPEC₂.

Or selon les modes de réalisation, l'invention permet de faire des pré-traitements lors de l'élaboration de la première séquence SEQ₁ et inversement, des détections peuvent être réalisées ou enrichies ou ajustées lors de l'élaboration de la seconde séquence SEQ₂. Ainsi, le procédé de l'invention peut être configurés au cas par cas en enrichissant ou en allégeant tel ou tel première spécification SPC₁ ou seconde spécification SPEC₂.

La seconde spécification SPEC₂ qui sera appliqué ultérieurement est considérée pour au moins une image de la séquence SEQ₁ afin d'appliquer des traitements d'images particulier pour une image donnée de la première séquence.

L'invention couvre les deux cas suivants :
▪ Une unique seconde spécification SPEC₂ est extraite et comprend l'ensemble des traitements à appliquer à chaque image d'une première séquence SEQ₁, à cette fin une identification d'un type de première séquence SEQ₁ permet d'identifier la bonne seconde spécification SPEC₂ à extraire ;
▪ Une pluralité de seconde spécification SPEC₂ sont extraites et chacune d'elle comprend un traitement à appliquer à une image ou un groupe d'images de la première séquence SEQ₁.

### Transmission de la séquence SEQ₁

Selon un mode de réalisation, la séquence d'images SEQ₁ est transmise à un autre serveur distant SERV₃ afin de réaliser d'autres traitements pour la publication automatique des images. Selon un autre mode de réalisation, la séquence SEQ₁ est traitée sur le même serveur SERV₁ ayant réalisé les traitements pour générer cette première séquence SEQ₁.

La suite de la description est décrite selon le mode mettant en oeuvre un autre serveur SERV₃, toutefois l'invention s'applique dans le cadre d'une mise en oeuvre de toutes les étapes réalisées sur un même serveur SERV₁.

Le serveur SERV₃ reçoit donc une nouvelle séquence SEQ₁ d'images à traiter. Selon un mode de réalisation, le serveur SERV₃ reçoit en outre du serveur SERV₁ des données d'exploitation. Ces données d'exploitation peuvent correspondre par exemple à des données décrivant des caractéristiques des images de la séquence d'images SEQ₁, telles que la résolution, les dimensions, les types de vues, les cadrages, ou encore des métadonnées telles que les classes de contexte ou les classes de vue ou des données relatives à des caractéristiques d'identification ou de position dans l'image de certains éléments, telles que l'identification d'un objet et sa position dans l'image, voire une zone dans laquelle il s'inscrit, etc.

Selon un exemple de réalisation, les données d'exploitation transmises correspondent à la première spécification SPEC₁.

### Traitements des images pour générer la seconde séquence SEQ2

Selon un mode de réalisation, un ensemble d'algorithmes d'apprentissage machine sont mis en oeuvre en fonction :
▪ des données de la première spécification SPEC₁ et/ou ;
▪ de la classe de contexte CLc associée à la première séquence SEQ₁ et/ou ;
▪ du ou des noms des fichiers des images et/ou ;
▪ d'une autre donnée d'exploitation transmise par le premier serveur SERV₁ avec la première séquence SEQ₁ d'images.

Un intérêt est d'appliquer un traitement adapté à la première séquence d'images reçues SEQ₁.

A cette fin, les traitements effectués le serveur SERV₃ permettent de détecter certaines données des images permettant d'appliquer les bonnes transformations et modifications des images de la première séquence SEQ₁ pour générer une seconde séquence SEQ₁ prête à être publiée.

Parmi les algorithmes, la présente invention propose de mettre en oeuvre une pluralité d'algorithmes peuvent être plus ou moins sélectionnés ou combinés entre eux afin d'effectuer plusieurs traitements sur une même chaine de traitement d'une première séquence SEQ₁.

Selon un premier mode de réalisation, un premier algorithme ALG₁ permet de détecter la classe de produits présente dans l'image.

Selon un premier exemple, cette information est connue en amont des traitements visant à générer la seconde séquence SEQ₂ par exemple parce qu'elle a été déterminée lors des traitements pour générer la première séquence SEQ₁, ou transmise avec la première séquence au sein d'une métadonnée telle qu'un label ou encore lorsqu'elle est encodée dans le nom du fichier d'au moins une image de la première séquence SEQ₁.

Selon un second exemple, cette information n'est pas connue à l'avance.

L'algorithme ALG₁ permet d'identifier une classe de produits CLp et de vérifier que l'information connue, le cas échéant, était correcte ou d'associer à la séquence d'images cette classe de produits CLp.

Cette classe de produit CLp peut être combinée avec chaque classe de vue CLv pour extraire une seconde spécification SPEC₂ afin de générer un traitement donné. L'étape d'extraction de la seconde spécification est notée EXT₂ sur la figure 2. Les traitements sont représentés à la figure 2 par les notations TI₁, TIₖ, Ti_{N}.

Par exemple si la classe de contexte CLc est une « photo d'ensemble » donné, la classe de vue CLv de l'image considérée est une classe de type « gros plan » et que la classe de produit CLp est un équipement électroménager, telle qu'une machine à laver ou un réfrigérateur, alors la seconde spécification extraite SPEC₂ peut comporter des données visant à supprimer le fond de l'image et à recadrer et recentrer le produit selon une côte prédéfinie et un gabarit prédéfini. Enfin, cette seconde spécification SPEC₂ peut comprendre des instructions pour lancer un second algorithme ALG₂ permettant de détecter la présence d'une étiquette sur le produit.

Selon un exemple, le gabarit comprend les dimensions d'un polygone, tel qu'un rectangle, positionné sur une ligne d'horizon et positionné vis-à-vis de marges latérales et de marges longitudinales.

### Exemple de la détection d'une étiquette

Le second algorithme ALG₂ est alors lancé afin de détecter une étiquette sur le produit. Si une étiquette est présente, la seconde spécification comprend en outre des données pour détourer cette étiquette et générer une nouvelle image d'un gros plan de l'étiquette. Les cotes et gabarit(s) de dimension et de cadrage de l'étiquette peuvent alors être extraits de la seconde spécification SPEC₂.

Selon une alternative, cet algorithme a été réalisé lors des étapes visant à générer une première séquence SEQ₁. L'invention permet de mettre en oeuvre cette étape en amont ou en aval de la transmission de la première séquence SEQ₁. Lorsque cette étape est réalisée en amont de la transmission de la première séquence SEQ₁, le résultat de la détection est transmis avec les images de la première séquence SEQ₁ sous la forme de métadonnées par exemple.

Lorsqu'aucune étiquette n'est reçue alors une notification NOTIF₂ peut être émise pour vérifier que la classe de produit est la bonne ou que la classe de contexte est la bonne. Selon un premier exemple, la notification NOTIF₂ est émise vers l'une des étapes de la figure 1, par exemple, vers un composant logiciel permettant de rechallenger la détection de la classe de contexte ou la classe de vue. La figure 2 représente une telle notification NOTIF₂ qui est émise et la figure 1 représente cette même notification qui est reçue par le bloc du premier classifieur CLASS₁. La notification NOTIF₂ peut prendre par exemple la forme d'un rapport dans un format numérique par exemple .doc, .pdf émis grâce à l'émission et la réception d'un message.

### Exemple : détection d'orientation

Selon un mode de réalisation, lorsqu'une classe de produit CLp donné est obtenue à partir d'un premier algorithme ALG₁ de détection ou de classification de la classe de produit de l'image et qu'une classe de vue CLv donnée associée à une même image d'une première séquence SEQ₁, un algorithme de détection de l'orientation du produit peut être lancé.

Selon une alternative, cet algorithme a été réalisé lors des étapes visant à générer une première séquence SEQ₁. L'invention permet de mettre en oeuvre cette étape en amont ou en aval de la transmission de la première séquence SEQ₁. Lorsque cette étape est réalisée en amont de la transmission de la première séquence SEQ₁, le résultat de la détection est transmis avec les images de la première séquence SEQ₁ sous la forme de métadonnées par exemple.

Selon un exemple, il peut s'agir de l'orientation d'une chaussure ou de tout autre accessoire pouvant se présenter selon différentes orientations. La détection d'une orientation peut consister à détecter une orientation droite ou une orientation gauche, c'est-à-dire une orientation du produit vers un bord droit ou un bord gauche de l'image.

La détection d'orientation d'un objet peut être réalisée notamment par l'exploitation d'une carte de profondeur de l'image et d'un algorithme d'apprentissage machine prenant en considération une image 3D, ou une image 2D et une carte de profondeur ou encore un nuage de points en 3D.

Un avantage de cette détection est d'orienter tous les objets de la même manière soit en choisissant et en appliquant une orientation droite, soit en choisissant une orientation gauche. Cette application peut être réalisée en générant une image miroir ou en conservant l'orientation d'origine.

La génération d'une image miroir vis-à-vis d'une image d'origine est obtenue par retournement de l'image selon une symétrie axiale.

La seconde spécification SPEC₂ peut comprendre des données d'orientation de manière à créer un effet d'homogénéité d'un rendu visuel visant en l'affichage de plusieurs centaines d'images. Les orientations ainsi modifiées permettent de créer un repère intuitif pour l'utilisateur consultant les images proposées.

Selon un autre mode de réalisation, un troisième algorithme ALG₃ permet de détecter une configuration d'un produit telle qu'une donnée caractéristique de sa configuration d'usage telle que « ouvert », fermé », « en marche », « éteint » ou encore une donnée caractéristique du produit telle que sa dimension, sa couleur, son modèle, etc.

À cet effet, un algorithme d'apprentissage machine peut être utilisé de sorte à classifier des images automatiquement pour définir des ensembles d'images classées selon une caractéristique du produit ou plus généralement de l'objet. L'apprentissage peut être supervisé ou non supervisé. Un ensemble de données d'entrainement permet en général d'améliorer la classification des objets. Typiquement, un apprentissage avec des images comportant différents modèles d'un même type de produit ou d'objet peut permettre de reconnaitre un modèle donné parmi différents modèles. Un algorithme permettant d'analyse des couleurs d'objets peut être moins contraint sur la labellisation des données d'entrainement.

Un intérêt d'une classification est de permettre de générer des effets d'images tels que des effets d'ambiance, des données sémantiques ou des liens hypertexte par exemple pour générer deux vues alternatives d'un équipent en position ouverte et fermée. Lors de leur publication sur plateforme numérique, la génération de lien et de données permettant de faciliter la navigation peut être réalisée automatiquement à partir des classes associées aux images. Typiquement, les classifications d'une image au sein d'une classe peuvent entrainer la création automatique d'une image miniature pour sa représentation en tant que vignette ou une inscription interactive invitant un utilisateur à réaliser une action sur l'image pour basculer sur une autre vue.

### Exemple dans lequel la classe de contexte permet d'ajuster le recadrage

Selon un autre mode de réalisation, la détection d'une classe de contexte CLc dite « photo d'ambiance » permet de générer une première séquence d'image SEQ₁ pour laquelle des traitements spécifiques seront réalisés en fonction de ladite classe de contexte et en fonction de l'objet détecté. En particulier, si la classe de produits correspond à un outil donné, tel qu'une tronçonneuse 20 représentée à la figure 7, au sein d'un paysage comportant des arbres 25, un rondin de bois 26 et un individu 1', alors le traitement de l'image de la figure 8 pourra être adapté en fonction de la seconde spécification SPEC₂ pour centrer l'objet et le recadrer selon un gabarit et une côte donnée.

Dans le cas où une image est classée dans une classe de contexte de type « photo d'ambiance » et qu'elle comprend un vêtement porté par un mannequin alors la seconde spécification SPEC₂ peut comprendre des données correspondant à un autre gabarit et à une autre cote permettant de générer un recadrage et un positionnement adapté. La figure 8 représente un tel recadrage dans lequel la tronçonneuse est représentée sur un socle 22 et comporte une étiquette 21. Dans cet exemple un fond d'image a été utilisé pour générer une image modifiée au sein de la seconde séquence SEQ₂.

Selon un mode de réalisation, la première séquence SEQ₁ est associée à une classe de contexte « portée ». Cette séquence d'images peut comporter une pluralité d'images dont l'image de la figure 4. D'autres images de la séquence SEQ₁ peuvent être utilisées et sont non représentées, telles qu'une image de la veste le pantalon 10 sans mannequin ou encore une image du pantalon et de la veste portée par l'individu représenté de dos.

Afin de déterminer une seconde spécification SPEC₂ appropriée aux traitements d'image à appliquer, la classe de vue CLv peut être utilisée pour chaque image afin d'extraire les données appropriées à exploiter pour réaliser un traitement adapté sur une certaine vue d'un objet dans l'image.

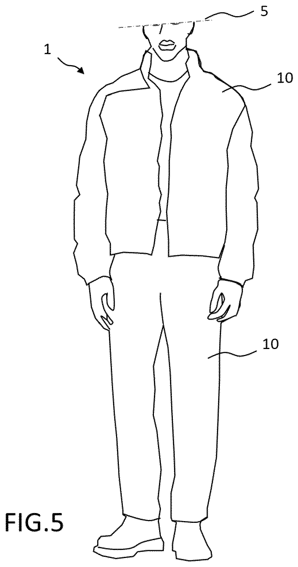

Lorsque le procédé de l'invention détecte une classe de produit de type « vêtement », cette classe de produit associé à la classe de contexte « porté » et à une classe de vue « de face et plein pied » permet d'extraire une seconde spécification donnée. Dans ce cas, cette seconde spécification SPEC₂ peut comprendre des données de recadrage visant à couper l'image au niveau des yeux 2 afin de respecter un anonymat du mannequin. Cette image est représentée à la figure 5. Pour cela, la seconde spécification SPEC₂ peut comprendre les instructions pour générer un quatrième algorithme ALG₄ de détection des yeux 2 d'un individu 1. Un tel algorithme peut mettre en oeuvre un modèle d'apprentissage machine tel qu'un réseau convolutionnel de type CNN. Lorsque ce quatrième algorithme ALG₄ est lancé sur cette image, les positions des yeux 2 permettent de générer automatiquement un axe de coupe 5.

Selon un autre exemple, un traitement vise à agrandir une portion d'image détourée dans une nouvelle image ou dans la même image.

Ainsi, l'invention permet de tirer un avantage d'une classification de contexte CLc, d'une classification de vue CLv et d'une classe de produit CLp afin de générer un traitement d'images approprié.

Ainsi, une nouvelle image est générée correspondant à l'image 5 dans laquelle l'individu 1 est représenté sans la partie haute de la tête, la partie au-delà de la ligne de coupe passant par les yeux 5.

Toujours dans ce même exemple, une nouvelle image est créée selon une autre ligne de coupe, la ligne 6. Cette ligne peut être automatiquement générée en fonction d'une cote et d'un gabarit présent dans la seconde spécification. La cote et le gabarit peuvent correspondre à un pourcentage d'une dimension extraite de l'image. A cet effet, un algorithme de reconnaissance de forme peut être utilisé. Cette image est représentée à la figure 6.

### Exemple d'une multi-détection de produit/objet à différentes étapes

Il est précisé, selon les modes de réalisation de l'invention, que la détection d'une classe de produit CLp peut être réalisée lors des étapes visant à générer une première séquence SEQ₁ ou il peut être réalisé lors des étapes visant à générer une seconde séquence SEQ₂. Il peut être également configuré une détection enrichie d'une classe de produit CLp donné lors des étapes visant à générer la seconde séquence SEQ₂ en collectant des données plus détaillées sur le produit. Cette étape peut être plus couteuse en temps et de ressource de calcul qu'une simple détection. Cette détection enrichie de produit peut être complémentaire d'une première détection de produit visant à identifier, plus rapidement dans les étapes de génération de la première séquence SEQ₁, une classe de produit de manière à optimiser les temps de calculs lorsque de nombreux ensembles d'images doivent être traitées.

On entend par une détection simple, une détection visant à classer grossièrement un produit dans une famille large de produit et une détection enrichie, une détection visant à recueillir plusieurs caractéristiques du produit.

### Exemple d'une extraction de contours ou d'une forme

Selon un exemple de réalisation, la seconde spécification SPEC₂ peut comprendre pour une vue donnée ou pour une pluralité de vues des données permettant l'exécution d'un cinquième algorithme ALG₅ visant à détourer la représentation d'un individu dans une image afin de l'extraire de ladite image. Le procédé permet ainsi de générer une nouvelle image avec une modification du fond de l'image. A cet effet, un algorithme de traitement d'images et d'analyse de contour de forme peut être utilisé. Cet algorithme peut être également combiné ou substitué à un algorithme de traitement de la carte de profondeur pour segmenter des portions de l'images qui ne sont pas dans le même plan image.

### Exemple d'un filtrage appliqué à une image

Selon un mode de réalisation, selon la classe de contexte CLc associé à la première séquence SEQ₁ et la classe de produit identifié CLp, une seconde spécification SPEC₂ est extraite et exploitée de sorte à extraire une donnée relative à un filtrage de l'image. Le filtre appliqué peut consister en un filtre d'ambiance, c'est-à-dire l'application d'une modification de la luminosité, de saturation et/ou de la teinte de l'image. Un filtre de netteté ou d'augmentation ou de réduction des effets de profondeur à partir de la carte de profondeur peut être appliqué.

### Exemple d'un recentrage d'une image

Selon un mode de réalisation, selon la classe de contexte CLc associé à la première séquence SEQ₁, la classe de vue CLv et la classe de produit identifié CLp, une seconde spécification SPEC₂ est extraite et exploitée de sorte à extraire une donnée relative au recentrage d'une portion de l'image. La portion de l'image recentrée correspond préférentiellement à la portion de l'image délimitant l'objet identifié dans l'image. La seconde spécification SPEC2 peut comprendre la définition d'une marge à respecter lors de la manipulation de la zone à recentrée afin de regénérer une nouvelle image recentrée à partir de l'image de la première séquence SEQ₁.

### Ajout d'images dans la seconde séquence

Selon un mode de réalisation, la seconde séquence SEQ₂ comprend autant d'images que la première séquence SEQ₁. Selon un autre mode de réalisation, la seconde séquence SEQ₂ peut comprend plus d'images que la séquence SEQ₁. Enfin selon un autre mode de réalisation, la séquence SEQ₂ comprend moins d'images que la séquence SEQ₁. Le nombre d'images de la seconde séquence SEQ₂ peut être extrait de la seconde spécification SPEC₂.

Selon un exemple de réalisation, la seconde séquence SEQ₂ peut être ordonnée selon le même ordre que la première séquence SEQ₁. Selon un exemple de réalisation, la seconde spécification SPEC₂ comprend un ordre différent de l'ordre de la première spécification SPEC₁. Selon un exemple de réalisation, une seconde spécification SPEC₂ peut comprendre une ré-indexation des images de la première séquence SEQ₁ et l'insertion d'une nouvelle image avec un nouvel index pour générer une seconde séquence d'images modiées SEQ₂.

Selon un mode de réalisation, une consigne d'ordonnancement et de nombre d'images sont réappliqués à la seconde séquence SEQ2 afin de générer une troisième séquence SEQ₃ qui est adaptée à une plateforme de publication donnée.

Lorsque tous les traitements sont appliqués aux images de la première séquence SEQ₁, que le bon nombre d'images est présent dans la seconde séquence SEQ₂ ou la troisième séquence SEQ₃ et que l'ordonnancement des images dans les séquences est conforme à la seconde spécification SPEC₂, la seconde séquence d'images SEQ₂ ou la troisième séquence d'images SEQ₃ est générée et enregistrée dans une mémoire.

Selon un mode de réalisation, la seconde séquence SEQ₂ ou la troisième séquence d'images SEQ₃ est soit traitée par le serveur SERV₃ pour la publication automatique vers un site WEB ou une plateforme numérique tierce, soit émise vers un autre serveur distant pour être exploitée ultérieurement par un système de publication d'images sur un support numérique.

## Revendications

1. Procédé mis en oeuvre par ordinateur pour la sélection et d'ordonnancement d'un ensemble d'images pour un traitement d'images d'une séquence d'images, ledit procédé comportant :
▪ Réception d'une pluralité d'images définissant un premier ensemble d'images (ENS₁) ;
▪ Première classification (CLASS₁) de chaque image du premier ensemble (ENS₁) selon des classes de contexte (CLc) à partir d'une première fonction apprenante mettant en oeuvre un modèle d'apprentissage machine entrainé à partir de données d'entrainement ;
▪ Extraction d'une première spécification (SPEC₁) donnée en fonction en fonction d'au moins une première classe de contexte (CLc₁) identifiée, ladite première spécification (SPEC₁) comportant un nombre d'images attendu (Nb₁), une pluralité de vues données (V1i) de chaque image attendue et un ordre (ORDi) desdites images attendues ;
▪ Sélection d'un premier sous-ensemble d'images (ENS₁') de la première classe de contexte (CLc₁) identifiée ;
▪ Seconde classification (CLASS₂) selon des classes de vue (CLv) de chaque image du premier sous-ensemble (ENS₁') sélectionnée en fonction de la première classe de contexte (CLc) donnée ;
▪ Sélection automatique d'une série d'images (S₁) du premier sous-ensemble d'images (ENS₁') comportant un nombre donné d'images correspondant au nombre attendu (Nb₁) de la spécification extraite (SPEC₁), chaque image sélectionnée correspondant à une vue donnée de la pluralité de vues données (V1i) de la spécification extraite (SPEC₁) ;
▪ Ordonnancement (ORD₁) de ladite série d'images selon la première spécification extraite (SPEC₁) et des images sélectionnées dans la première série d'images (S₁) ;
▪ Renommage (REN₁) des images sélectionnées de la première série (S₁) et enregistrement desdites images avec un premier ensemble de métadonnées comportant au moins la classe de contexte (CLc) pour application d'un traitement d'images en fonction d'une seconde spécification données (SPEC₂) relative à un traitement à appliquer à une séquence d'images.

2. Procédé selon la revendication 1 **caractérisé en ce que** les images reçues du premier ensemble d'images (ENS₁) comportent un pré-traitement visant :
▪ à identifier les doublons d'images dudit premier ensemble et à garder qu'une image parmi une pluralité d'images sensiblement identiques et/ou ;
▪ à vérifier une dimension minimale de chaque image afin d'autoriser le recadrage d'une image lorsque ses dimensions sont suffisantes.

3. Procédé selon la revendication 1 **caractérisé en ce que** les images reçues du premier ensemble d'images (ENS₁) sont classifiées par la première classification (CLASS₁), chaque image étant associée à un score relatif à la probabilité d'appartenir à ladite classe de contexte (CLc), une étape de sélection d'un nombre d'images ayant les meilleurs scores dans chaque classe de contexte permettant de sélectionner les images retenues pour l'application de la seconde classification (CLASS₂).

4. Procédé selon la revendication 1 **caractérisé en ce qu'**un calcul d'un score relatif à la probabilité d'appartenir à ladite classe de vue (CLv) est réalisé pour chaque image classifiée par la première classification (CLASS1) ou par chaque image du premier ensemble (ENS1), une étape de sélection d'un nombre d'images ayant les meilleurs scores dans chaque classe de vue permettant de sélectionner les images retenues pour générer la première séquence (SEQ₁).

5. Procédé selon la revendication 1 **caractérisé en ce que** la sélection du premier sous-ensemble d'images (ENS₁') extrait du premier ensemble d'images (ENS₁) et la première spécification (SPEC₁) sélectionnée est déterminée sont déterminées en fonction d'une distribution obtenue de la classification d'une proportion d'images classifiées dans chaque classe de contexte (CLc).

6. Procédé selon la revendication 1 **caractérisé en ce que** la classe de contexte (CLc) peut se rapporter à :
▪ une première classe de contexte (CLc₁) correspondant à des images comportant un sujet tel qu'un individu au sein de l'image, ou ;
▪ une seconde classe de contexte (CLc₂) correspondant à des images comportant un sujet tel qu'un objet au sein de l'image, ou ;
▪ une troisième classe de contexte (CLc₃) correspondant à des images comportant un sujet tel qu'un objet au sein de l'image.

7. Procédé selon la revendication 1 **caractérisé en ce qu'**un contrôle de nombre de vues est réalisé consécutivement à la seconde classification (CLASS₂), ledit contrôle permettant de vérifier l'existence dans chaque premier ensemble (ENS₁) d'au moins une image classée selon chaque classe de vue de la première spécification (SPEC₁), lorsque le contrôle de nombre de vues n'est pas conforme à la valeur de la première spécification, alors une notification électronique (NOTIF1) est émise automatiquement vers un serveur distant, ladite notification comportant un indicateur de l'image manquante selon une classe de vue.

8. Procédé selon la revendication 1 **caractérisé en ce qu'**une classe de produit (CLp) d'au moins une image du premier ensemble (ENS₁) est déterminée par l'application d'un algorithme de classification d'image pour classifier des images en entrée selon une pluralité de classes de produit (CLp), ledit algorithme de classification d'image pour classifier ladite image selon une classe produit (CLp) étant réalisé :
▪ En mettant en oeuvre un algorithme d'apprentissage machine entrainé à partir d'un ensemble d'images d'entrainement labelisées et/ou ;
▪ En mettant en oeuvre un algorithme d'apprentissage machine entrainé à partir d'un ensemble de noms de fichiers labelisés.

9. Procédé selon la revendication 8 **caractérisé en ce que** la première spécification (SPEC₁) est déterminée en fonction :
▪ de la détermination de la classe de produit (CLp) d'au moins une image du premier ensemble (ENS₁) et/ou ;
▪ d'une distribution obtenue de la classification d'une proportion d'images classifiées dans chaque classe de contexte (CLc).

10. Procédé selon la revendication 1 **caractérisé en ce que** la classe de vue (CLv) peut se rapporter à :
▪ une première classe de vue (CLv₁) correspondant à des images comportant un objet en gros plan au sein de l'image, ou ;
▪ une seconde classe de vue (CLv₂) correspondant à des images comportant un objet ou un sujet présent dans un paysage au sein de l'image, ou ;
▪ une troisième classe de contexte (CLv₃) correspondant à des images comportant un objet ayant un étiquetage au sein de l'image,
▪ une quatrième classe de contexte (CLv₄) correspondant à des images comportant un objet d'un type donné ayant une première orientation donnée au sein de l'image.

11. Procédé selon l'une quelconque des revendications 1 à 10 **caractérisé en ce qu'**il comprend :
▪ réception d'une séquence d'images ordonnées (SEQ₁), ladite séquence étant associée à une classe de contexte (CLc), chaque image (IM₁) de ladite séquence (SEQ₁) représentant au moins une vue d'un produit, chaque image (IM₁) comportant un nom de fichier ;
▪ identification de la classe de vues (CLv) de chaque image (IM₁) ;
▪ identification d'une classe de produit (CLp) d'un objet présent dans au moins une image de la première séquence (SEQ₁) ;
▪ extraction d'une seconde spécification donnée (SPEC₂) en fonction de la classe de contexte (CLc), de la classe de vue (CLv) et de la classe de produit (CLp) d'au moins une image de la séquence (SEQ₁), ladite seconde spécification (SPEC₂) comportant pour au moins une image de la séquence (SEQ₁) une donnée de traitement à appliquer à ladite image ;
▪ Traitement de l'image (TI₁, TIₖ, TI_{N}) pour générer une image modifiée ;
▪ Génération d'une seconde séquence (SEQ₂) d'images pour leur publication sur une page WEB comportant ladite image modifiée.

12. Procédé selon la revendication 8 ou 11 **caractérisé en ce qu'**il comprend le décodage du nom de fichier d'au moins une image de la première séquence (SEQ₁) reçue, ledit décodage mettant en oeuvre un premier composant segmentant un ensemble de blocs de caractères alphanumériques composant ledit nom de fichier et mettant en oeuvre un algorithme d'apprentissage machine pour classifier ledit nom de fichier parmi des classes prédéfinies.

13. Procédé selon la revendication 8 ou 11 **caractérisé en ce que** la classe de produit (CLp) est obtenue :
▪ Soit par l'application d'un algorithme de traitement d'image pour reconnaitre une classe de produit (CLp) par un algorithme d'apprentissage machine entrainé à partir d'un ensemble d'images d'entrainement ;
▪ Soit par le décodage d'une métadonnée transmise avec la première séquence d'images (SEQ₁) ;
▪ Soit par le décodage d'un nom de fichier d'une image de la première séquence (SEQ1) dans lequel la classe produit (CLp) est encodé.

14. Procédé selon l'une quelconque des revendications 11 à 13 **caractérisé en ce que** les données de traitement extraites de la seconde spécification (SPEC₂) comprennent :
▪ Des données définissant une cote et un gabarit de produit pour générer un recadrage d'une zone délimitant ledit objet et un positionnement de ladite zone recadrée en fonction (SPEC₂) ;
▪ Des données définissant une ligne d'horizon de l'image visant à positionner un point de l'objet sur ladite ligne d'horizon, le point pouvant être par exemple le barycentre ou le milieu de la zone délimitant ledit objet ;
▪ Des données de recadrage d'une étiquette détectée dans une zone dudit objet de l'image pour extraire ladite étiquette le cas échéant pour générer une image de l'étiquette selon une dimension prédéfinie ;
▪ des données de redimensionnement de l'image, de résolution de l'image ou de repositionnement dans un nouveau cadre de l'image d'un point caractéristique de l'image ;
▪ des données d'orientation d'un objet afin d'appliquer une modification de l'orientation du produit dans l'image pour générer une nouvelle image ;
▪ une donnée de configuration prédéfinie.

15. Système de traitement automatisé d'un ensemble d'images pour leur publication sur un média numérique **caractérisé en ce qu'**il comporte un premier serveur (SERV₁) permettant de réaliser les étapes du procédé selon l'une quelconque des revendications 1 à 10 et un second serveur (SERV₃) permettant de réaliser les étapes du procédé selon l'une quelconque des revendications 11 à 14, lesdites images traitées étant organisées sous la forme d'une séquence d'images ordonnées.
